# EUROPEAN PATENT SPECIFICATION

(11) **EP 4 095 549 B1**
(45) Date of publication and mention of the grant of the patent: **29.10.2025**
(21) Application number: 21745045.1
(22) Date of filing: 14.01.2021
(51) Int. Cl.: G01S 7/497, H04M 1/725, G01S 17/08

(54) **ELECTRONIC DEVICE AND NOISE FLOOR CALIBRATION METHOD**
ELEKTRONISCHES GERÄT UND VERFAHREN ZUR KALIBRIERUNG DES RAUSCHBODENS
DISPOSITIF ÉLECTRONIQUE ET PROCÉDÉ D'ÉTALONNAGE DE BRUIT DE FOND

(30) Priority: 21.01.2020 CN 202010071361
(43) Date of publication of application: 30.11.2022
(73) Proprietor: Vivo Mobile Communication Co., Ltd., Dongguan, Guangdong 523863 (CN)
(72) Inventor: ZHENG, Xiaosheng, Dongguan, Guangdong 523863 (CN)
(74) Representative: Raffay & Fleck
(86) International application number: PCT/CN2021/071724
(87) International publication number: WO 2021/147766

(56) References cited:
- EP-A1- 2 813 862
- WO-A1-2017/185701
- CN-A- 106 791 209
- CN-A- 107 219 515
- CN-A- 107 943 345
- CN-A- 109 840 032
- CN-A- 110 609 977
- CN-A- 111 289 956
- US-A1- 2019 187 254

## Description

### TECHNICAL FIELD

The present invention relates to the field of electronic devices, and in particular to an electronic device and a background noise calibration method.

### BACKGROUND

For an infrared sensor under a display screen, an infrared emitting lamp and an infrared receiving chip are placed under the display screen, and infrared light is emitted into the air through the display screen. When a person is approaching, the person's face reflects the infrared light, and the reflected light is sensed by the receiving chip through the display screen, and the receiving chip collects a reflection signal to determine whether the person is approaching.

An infrared signal transmitted in the air for face reflection is considered as a useful signal, and a signal that is strung into the receiving chip inside a structure is called a background noise. A signal collected by the receiving chip after plurality of reflections of the infrared light through the display screen, a signal of optical crosstalk from a gap between a middle frame and the display screen, and a signal of optical crosstalk under the middle frame, and the like. When no object is approaching, the infrared light received by the chip includes only the background noise. A useful signal needs to pass through the display screen twice after being transmitted, and then can reach the receiving chip. Transmittance of the infrared light through the display screen is less than 10% only, resulting in a very weak useful signal and a stronger background noise than the useful signal, which is not conducive to identification of the useful signal. A slight difference in structure will lead to a great difference in an original background noise. Infrared background noises of machines produced in a same batch has bad consistency, which can be compensated through calibration. However, when deformation occurs in the structure, such as a gap change caused due to thermal expansion and cold contraction of glue, a background noise caused by structural deformation cannot be controlled, and changes in the background noise and a useful signal cannot be distinguished by the receiving chip, resulting in inaccurate and incorrect determination for the background noise. As a result, it cannot be accurately determined whether someone approaches the display screen.

CN107943345A discloses a calibration method of a proximity sensor disposed in a screen display area of an electronic equipment. The method includes: acquiring a first signal intensity value of the proximity sensor at the time when the screen is in a screen turn-off state; acquiring a second signal intensity value of the proximity sensor at the time when the screen is in a screen turn-on state; calculating a calibration value according to the first signal intensity value and the second signal intensity value; and calibrating the proximity sensor according to the calibration value.

EP2813862A1 discloses a distance measurement device and a calibration method thereof based on phase measurement of a double-wavelength laser tube. The method comprises the following steps: step 1, a first wavelength light-wave is transmitted to a target to be measured through a first light filter from a light wave transmitting device during forming an external light path, the light-wave is modulated from a high frequency oscillating signal; step 2, a second wavelength light-wave is transmitted to the receiving device through a second light filter from the light wave transmitting device during forming an internal light path, as an internal light path signal of a basic reference, the second light-wave is generated from the high frequency oscillating signal; step 3, the receiving device compares phases of the two sequentially received light-waves, and output a phase signal eliminated the base reference.

### SUMMARY

In view of this, the present invention provides an electronic device and a background noise calibration method, to resolve a problem that a background noise caused by structural deformation cannot be controlled, and changes in the background noise and a useful signal cannot be distinguished through a receiving chip, resulting in inaccurate and incorrect determination for the background noise and inaccurate determination of whether someone approaches the display screen.

The invention is set out in the appended set of claims.

The technical solutions used in the present invention can achieve the following beneficial effects:
for the electronic device according to the present invention, the transmitter is disposed on the non-display side of the display screen, and is configured to transmit the first optical signal and the second optical signal to the display screen, and the transmittance of the first optical signal passing through the display screen is greater than that of the second optical signal passing through the display screen; the receiver is disposed on the non-display side of the display screen, and is configured to receive the first optical signal and the second optical signal; and the processor is configured to determine the calibration coefficient according to the second optical signal received by the receiver and the second reference background noise, and determine the calibrated first reference background noise according to the calibration coefficient and the first reference background noise. For the electronic device in the present invention, the calibration coefficient can be determined according to the second optical signal and the second reference background noise, and the calibrated first reference background noise can be determined according to the calibration coefficient and the first reference background noise, and then a change in the first reference background noise caused by structural deformation can be calibrated. Therefore, the influence of the structural deformation on the first reference background noise can be reduced, and the calibrated first reference background noise has high accuracy, which helps to determine whether an object approaches the display screen.

### BRIEF DESCRIPTION OF DRAWINGS

FIG. 1 is a schematic structural diagram of an electronic device according to the present invention; and
FIG. 2 is a schematic flowchart of a background noise calibration method according to the present invention.

Reference signs:
Display screen 10; Transmitter 20; Receiver 30;
Middle frame 40; Light-shielding material piece 50; Printed circuit motherboard 60; Object 70.

### DETAILED DESCRIPTION

An electronic device according to the present invention will be described in detail below.

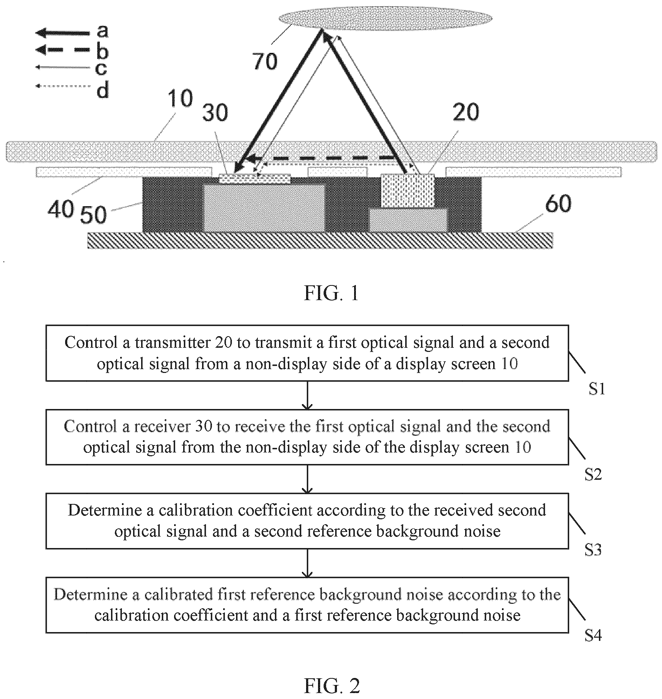

As shown in FIG. 1, an electronic device according to the present invention includes a display screen 10, and further includes a transmitter 20, a receiver 30, and a processor.

Specifically, the transmitter 20 is disposed on a non-display side of the display screen 10, and the transmitter 20 is configured to transmit a first optical signal and a second optical signal to the display screen 10, and transmittance of the first optical signal passing through the display screen 10 is greater than that of the second optical signal passing through the display screen 10. The receiver 30 is disposed on the non-display side of the display screen 10, and the receiver 30 is configured to receive the first optical signal and the second optical signal. The processor is connected to the receiver 30, and the processor is configured to determine a calibration coefficient according to the second optical signal received by the receiver 30 and a second reference background noise, and determine a calibrated first reference background noise according to the calibration coefficient and a first reference background noise. The first reference background noise is a theoretical value of the first optical signal received by the receiver 30 when no object approaches the display screen 10, and the second reference background noise is a theoretical value of the second optical signal received by the receiver 30 when no object approaches the display screen 10.

That is, the electronic device mainly includes the display screen 10, the transmitter 20, the receiver 30, and the processor. Both the transmitter 20 and the receiver 30 are disposed on the non-display side of the display screen 10. The transmitter 20 transmits the first optical signal and the second optical signal to the display screen 10. The transmitter 20 is a light-emitting diode (Light Emitting Diode, LED) light source. The receiver 30 receives the first optical signal and the second optical signal. The first optical signal is infrared light, such as infrared light with a wavelength of 950 nm. The transmittance of the first optical signal passing through the display screen 10 is greater than that of the second optical signal passing through the display screen 10, and the transmittance of the second optical signal passing through the display screen 10 is much less than that of the first optical signal passing through the display screen 10. Therefore, relatively few second optical signals pass through the display screen 10, and more first optical signals pass through the display screen 10. When an object approaches the display screen 10, relatively many first optical signals are reflected by the object, which helps the receiver 30 to receive the signals and accurate calculation. A wavelength of light with low transmittance passing through the display 10 needs to be selected for the second optical signal, and the wavelength can be adjusted for transmittance for different display screens. According to transmittance for most current display screens, ultraviolet light with a wavelength less than 400 nm can be used for the second optical signal. Transmittance of the ultraviolet light with the wavelength less than 400 nm passing through the existing display screen is not more than 1% generally, which is low.

As shown in FIG. 1, light paths a and b are paths of the first optical signal, and optical paths c and d are paths of the second optical signal. When no object approaches the display screen 10, only light paths b and d exist. When an object 70 (such as a person's face) is approaching, light paths a and c exist after a reflection by the object 70. During application, light path c is not expected, and existence of light path c causes the received second optical signal to be changed when the object is approaching, and then it is determined by mistake that a structural change occurs. Because light path c needs to pass through the display screen 10 twice, transmittance of the second optical signal passing through the display screen 10 is very low. The transmittance is 1%, when energy of the second optical signal transmitted by the transmitter 20 and passing through the display screen is P, energy received by the receiver 30 is only 1/10,000 of P. Therefore, the energy is extremely low and can be ignored.

When no object approaches the display screen 10, the receiver 30 will not receive an optical signal reflected by the object. When no structural deformation occurs, the first reference background noise is a theoretical value of the first optical signal received by the receiver 30 when no object approaches the display screen 10, and the second reference background noise is a theoretical value of the second optical signal received by the receiver 30 when no object approaches the display screen 10. A second optical signal received by the receiver 30 when the structural deformation occurs is different from the second optical signal received when the no structural deformation occurs, and the first reference background noise and the second reference background noise are also changed when the structural deformation occurs. Because the transmittance of the second optical signal passing through the display screen is relatively low, a variation of the second reference background noise can be detected more accurately compared with a variation of the first reference background noise. To more accurately calculate a change in the first reference background noise caused by the structural deformation, it is necessary to calibrate the first reference background noise after obtaining a calibration coefficient according to the second optical signal received by the receiver 30.

The processor is connected to the receiver 30, and the processor can determine the calibration coefficient according to the second optical signal received by the receiver 30 and the second reference background noise. Because relatively few second optical signals pass through the display screen 10, when the structural deformation occurs, the calibration coefficient can be determined according to the second optical signal received by the receiver 30 and the second reference background noise. The first reference background noise is also changed correspondingly due to the structural deformation, and the calibrated first reference background noise can be determined according to the calibration coefficient and the first reference background noise. That is, when no object is approaching, only light paths b and d exist, and the first reference background noise and the second reference background noise can be obtained first. When the second reference background noise is changed, it is considered that structural deformation occurs, resulting in a change in the light paths. A change rate is calculated according to the change in the second reference background noise. Because paths of the first optical signal and the second optical signal are completely consistent, the change rate can be used as a calibration coefficient for calibrating the second reference background noise.

In an actual process, light path c does exist, light path c can be measured, and a maximum change value of light path c can be calculated. The maximum change value of light path c can be used as a minimum sensitivity range. During measurement, the maximum change value of c can be obtained while something is used to approach the display screen slowly, the maximum change value of c is cmax. The structural deformation is considered to occur only when the change value of the second reference background noise is greater than the cmax. No structural deformation is considered to occur when the change value of the second reference background noise is less than the cmax. In addition, the display screen is unglued during use by a user, which affects other functions except infrared light, resulting in function abnormity. Micro-deformation of the structure can be detected through the change in the second reference background noise, so that parameter compensation can be performed or the user can be prompted. In addition, when the structural deformation (such as screen unglued) occurs, the user does not go through after-sales processing. Therefore, a defect rate of an unglued screen cannot be collected. Data of the structural deformation can further be collected based on the change in the second reference background noise, which helps to improve subsequent design, product quality, and user experience.

In the electronic device of the present invention, the calibration coefficient can be determined through the second optical signal and the second reference background noise, and the calibrated first reference background noise can be determined according to the calibration coefficient and the first reference background noise, and then the change in the first reference background noise caused by the structural deformation can be calibrated. Therefore, the influence of the structural deformation on the first reference background noise can be reduced, and the calibrated first reference background noise has high accuracy, which helps to accurately determine whether an object approaches the display screen.

In the present invention, the processor is further configured to use a ratio of the second optical signal received by the receiver 30 to the second reference background noise as the calibration coefficient. The processor is further configured to use a product of the calibration coefficient and the first reference background noise as the calibrated first reference background noise. The first reference background noise is A when no object approaches the display screen 10, and the second reference background noise is B when no object approaches the display screen 10, and a second optical signal actually received by the receiver 30 is αB when the structural deformation occurs. In this case, a ratio of the second optical signal received by the receiver 30 to the second reference background noise is α, and α is used as the calibration coefficient. The first reference background noise is calibrated through α when the structural deformation occurs, and a product of the calibration coefficient α and a first reference background noise A is used as the calibrated first reference background noise αA. That is, the first reference background noise is αA when the structural deformation occurs, and a change in the first reference background noise caused by the structural deformation is calibrated, so that the influence of the structural deformation on the first reference background noise can be reduced.

In the present invention, the processor is further configured to calculate, according to the first optical signal received by the receiver 30 and the calibrated first reference background noise, a variation of the first optical signal received by the receiver 30, and determine, according to the variation, whether an object approaches the display screen 10. The variation of the first optical signal received by the receiver 30 can be calculated more accurately through the calibrated first reference background noise, and it can be accurately determined whether an object approaches the display screen 10.

The electronic device further includes a middle frame 40. The display screen 10 is disposed on the middle frame 40. An elastic layer, such as elastic glue, is disposed between the middle frame 40 and the display screen 10, and hard contact between the display screen 10 and the middle frame 40 can be avoided through the elastic layer. The electronic device further includes a printed circuit motherboard 60. The printed circuit motherboard 60 is disposed on the non-display side of the display screen 10. The transmitter 20 and the receiver 30 are respectively disposed between the display screen 10 and the printed circuit motherboard 60, and the transmitter 20 and the receiver 30 are disposed on the printed circuit motherboard 60. A light-shielding material piece 50 is disposed on outer peripheries of the transmitter 20 and the receiver 30. Under the condition that the transmitter 20 transmitting an optical signal and the receiver 30 receiving the optical signal are not affected, a light-shielding material can be filled in gaps between components to reduce mutual crosstalk of optical signals. The light-shielding material piece 50 is disposed in gaps between the transmitter 20, the receiver 30, and the middle frame 40. The light-shielding material piece 50 is provided in a gap between the transmitter 20 and the receiver 30, a gap between the transmitter 20 and the middle frame 40, and a gap between the receiver 30 and the middle frame 40, respectively. The light-shielding material piece 50 is a silicone material cover, which can reduce the mutual crosstalk of optical signals, so that the receiver 30 can accurately calculate a received optical signal and reduce a deviation.

The present invention further provides a background noise calibration method.

As shown in FIG. 2, the background noise calibration method according to the present invention can be applied to the electronic device described above and includes:
Step S1: Control a transmitter 20 to transmit a first optical signal and a second optical signal from a non-display side of a display screen 10;
Step S2: Control a receiver 30 to receive the first optical signal and the second optical signal from the non-display side of the display screen 10;
Step S3: Determine a calibration coefficient according to the received second optical signal and a second reference background noise; and
Step S4: Determine a calibrated first reference background noise according to the calibration coefficient and a first reference background noise.

Transmittance of the first optical signal passing through the display screen 10 is greater than that of the second optical signal passing through the display screen 10. The first reference background noise is a theoretical value of the first optical signal received by the receiver 30 when no object approaches the display screen 10, and the second reference background noise is a theoretical value of the second optical signal received by the receiver 30 when no object approaches the display screen 10. It should be noted that S1 to S4 in the foregoing steps do not represent a necessary sequence of steps, and a sequence of different steps can be adjusted according to actual needs.

That is, in the foregoing background noise calibration method, the first optical signal and the second optical signal are transmitted from the non-display side of the display screen 10, and the first optical signal and the second optical signal are received from the non-display side of the display screen 10. The first optical signal and the second optical signal can be transmitted through the transmitter 20, and the first optical signal and the second optical signal can be received through the receiver 30. The transmittance of the first optical signal passing through the display screen 10 is greater than that of the second optical signal passing through the display screen 10, and the transmittance of the second optical signal passing through the display screen 10 is much less than that of the first optical signal passing through the display screen 10. Therefore, relatively few second optical signals pass through the display screen 10, and more first optical signals pass through the display screen 10. When an object approaches the display screen 10, relatively many first optical signals are reflected by the object, which help receiving by the receiver 30.

The calibration coefficient can be determined according to the second optical signal received by the receiver 30 and the second reference background noise. Because relatively few second optical signals pass through the display screen 10, when structural deformation occurs, the calibration coefficient can be determined according to the second optical signal received by the receiver 30 and the second reference background noise. The first reference background noise is a theoretical value of the first optical signal received by the receiver 30 when no object approaches the display screen 10, and the second reference background noise is a theoretical value of the second optical signal received by the receiver 30 when no object approaches the display screen 10. The first reference background noise of the first optical signal is also changed correspondingly due to the structural deformation, and the calibrated first reference background noise can be determined according to the calibration coefficient and the first reference background noise. In the foregoing method, a change in the first reference background noise caused by the structural deformation can be calibrated. Therefore, the influence of the structural deformation on the first reference background noise can be reduced, and the calibrated first reference background noise has high accuracy, which helps to determine whether an object approaches the display screen.

In the present invention, the determining a calibration coefficient according to the received second optical signal and a second reference background noise includes: using a ratio of the second optical signal received by the receiver 30 to the second reference background noise as the calibration coefficient.

According to the present invention, the determining a calibrated first reference background noise according to the calibration coefficient and a first reference background noise includes: using a product of the calibration coefficient and the first reference background noise as the calibrated first reference background noise.

In the present invention, the method further includes: calculating a variation of the received first optical signal according to the received first optical signal and the calibrated first reference background noise, and determining whether an object approaches the display screen 10 according to the variation. The variation of the first optical signal can be accurately determined according to the calibrated first reference background noise, which helps to accurately determine whether an object approaches the display screen.

The present invention further provides a computer program that is stored in the memory of the electronic device and that is run on the processor. When the computer program is executed by the processor, processes of the foregoing method are implemented, and a same technical effect can be achieved. To avoid repetition, details are not described herein again.

Unless otherwise defined, the technical terms or scientific terms used in the present invention shall have the general meanings understood by a person having ordinary skill in the field in which the present invention falls. The "first", "second" and similar words used in the present invention are only intended to distinguish different components, rather than to indicate any order, quantity, or importance. Similar words such as "connect" or "connection" are not limited to physical or mechanical connections, but include electrical connections, no matter it is direct or indirect. "Upper", "lower", "left", "right", and the like are only intended to indicate a relative positional relationship. When an absolute position of the described object changes, the relative positional relationship changes accordingly as well.

A person of ordinary skill in the art realizes that units and algorithm steps in this specification can be implemented by using electronic hardware, or a combination of computer software and the electronic hardware. Whether these functions are performed by using hardware or software depends on a specific application and design constraints of the technical solutions.

A person of ordinary skill in the art clearly understands that, for convenient and simple description, for the specific working processes of the system, apparatus, and unit described above, reference is made to a corresponding process in the foregoing method, and details are not described herein again.

Division into the units is only logical function division.

The units described as separate parts may or may not be physically separate, and parts displayed as units may or may not be physical units, that is, are located in one location, or are distributed on a plurality of network units. Some or all of the units are selected according to actual needs,

If the functions are implemented in a form of software function units and sold or used as independent products, the functions are stored in a computer-readable storage medium. Based on such understanding, the technical solutions of the present disclosure essentially, or the part contributing to the related art is implemented in a form of a software product. The computer software product is stored in a storage medium, and includes several instructions for enabling a computer device (which is a personal computer, a server, a network device, or the like) to perform all or some of the steps of the methods described in the present disclosure. The foregoing storage medium includes various media that can store a program code such as a USB flash disk, a mobile hard disk, a ROM, a RAM, a magnetic disk, an optical disc, or the like.

A person of ordinary skill in the art can understand that all or some of the procedures in the above methods are implemented by a computer program controlling related hardware. The program is stored in a computer-readable storage medium. When the program is executed, by the processor of the electronic device of the invention, the procedures of the foregoing methods are performed. The storage medium includes a magnetic disk, a compact disc, a read-only memory (Read-Only Memory, ROM), a random access memory (Random Access Memory, RAM), or the like.

It can be understood that the present disclosure is implemented by hardware, software, firmware, middleware, microcode, or a combination thereof. For hardware, modules, units, and subunits is implemented in one or more application specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of the present disclosure, or a combination thereof.

## Claims

1. An electronic device configured to determine whether an object approaches a display screen comprising:
a display screen (10) disposed on a middle frame (40);
a transmitter (20), disposed on a non-display side of the display screen (10), and configured to transmit a first optical signal and a second optical signal to the display screen (10), wherein transmittance of the display screen (10) for the first optical signal is greater than that for the second optical signal;
a receiver (30), disposed on the non-display side of the display screen (10), and configured to receive the first optical signal and the second optical signal that are reflected by an object (70) disposed on a display side of the display screen (10);
a printed circuit motherboard (60), disposed on the non-display side of the display screen (10), wherein the transmitter (20) and the receiver (30) are respectively disposed between the display screen (10) and the printed circuit motherboard (60), the transmitter (20) and the receiver (30) are disposed on the printed circuit motherboard (60), and a light-shielding material piece (50) is disposed on outer peripheries of the transmitter (20) and the receiver (30); and
a processor, connected to the receiver (30), and configured to determine a calibration coefficient according to the second optical signal received by the receiver (30) and a second reference background noise, wherein the second reference background noise is a value of the second optical signal received by the receiver (30) when no object approaches the display screen (10), and determine a calibrated first reference background noise according to the calibration coefficient and a first reference background noise, wherein the first reference background noise is a value of the first optical signal received by the receiver (30) when no object approaches the display screen (10);
wherein the first reference background noise is calibrated after obtaining the calibration coefficient according to the second optical signal received by the receiver.

2. The electronic device according to claim 1, wherein the processor is further configured to use a ratio of the second optical signal received by the receiver (30) to the second reference background noise as the calibration coefficient.

3. The electronic device according to claim 1, wherein the processor is further configured to use a product of the calibration coefficient and the first reference background noise as the calibrated first reference background noise.

4. The electronic device according to claim 1, wherein the processor is further configured to calculate, according to the first optical signal received by the receiver (30) and the calibrated first reference background noise, a variation of the first optical signal received by the receiver (30), and determine, according to the variation, whether an object approaches the display screen (10).

5. A background noise calibration method, performed by an electronic device according to any one of claims 1 to 4, comprising:
controlling (S1) a transmitter (20) to transmit a first optical signal and a second optical signal from a non-display side of a display screen (10);
controlling (S2) a receiver (30) to receive the first optical signal and the second optical signal from the non-display side of the display screen (10);
determining (S3) a calibration coefficient according to the received second optical signal and a second reference background noise; and
determining (S4) a calibrated first reference background noise according to the calibration coefficient and a first reference background noise,
wherein transmittance of the display screen (10) for the first optical signal passing through is greater than that of the second optical signal passing through the display screen (10); and
the first reference background noise is a value of the first optical signal received by the receiver (30) when no object approaches the display screen (10), and the second reference background noise is a value of the second optical signal received by the receiver (30) when no object approaches the display screen (10).

6. The method according to claim 5, wherein the determining (S3) a calibration coefficient according to the received second optical signal and a second reference background noise comprises:
using a ratio of the second optical signal received by the receiver (30) to the second reference background noise as the calibration coefficient.

7. The method according to claim 5, wherein the determining (S4) a calibrated first reference background noise according to the calibration coefficient and a first reference background noise comprises:
using a product of the calibration coefficient and the first reference background noise as the calibrated first reference background noise.

8. The method according to claim 5, further comprising:
calculating a variation of the received first optical signal according to the received first optical signal and the calibrated first reference background noise, and determining, according to the variation, whether an object approaches the display screen (10).

9. A computer software product stored in a non-volatile storage medium configured to be executed by the processor of an electronic device according to any one of claims 1 to 4 to implement the steps of the method according to any one of claims 5 to 8.

## Patentansprüche

1. Elektronisches Gerät, dazu konfiguriert, festzustellen, ob sich ein Objekt einem Anzeigebildschirm nähert, umfassend:
einen an einem mittleren Rahmen (40) angeordneten Anzeigebildschirm (10);
einen Sender (20), angeordnet auf einer Nichtanzeigeseite des Anzeigebildschirms (10), und dazu konfiguriert, ein erstes optisches Signal und ein zweites optisches Signal an den Anzeigebildschirm (10) zu übertragen, wobei der Transmissionsgrad des Anzeigebildschirms (10) für das erste optische Signal größer als jener für das zweite optische Signal ist;
einen Empfänger (30), angeordnet auf der Nichtanzeigeseite des Anzeigebildschirms (10) und dazu konfiguriert, das erste optische Signal und das zweite optische Signal, die von einem auf einer Anzeigeseite des Anzeigebildschirms (10) angeordneten Objekt (70) reflektiert werden, zu empfangen;
eine Leiterplattenhauptplatine (60), angeordnet auf der Nichtanzeigeseite des Anzeigebildschirms (10), wobei der Sender (20) und der Empfänger (30) jeweils zwischen dem Anzeigebildschirm (10) und der Leiterplattenhauptplatine (60) angeordnet sind, wobei der Sender (20) und der Empfänger (30) auf der Leiterplattenhauptplatine (60) angeordnet sind und ein Teil (50) aus einem lichtabschirmenden Material auf äußeren Peripherien des Senders (20) und des Empfängers (30) angeordnet ist; und
einen Prozessor, verbunden mit dem Empfänger (30) und dazu konfiguriert, einen Kalibrierungskoeffizienten entsprechend dem vom Empfänger (30) empfangenen zweiten optischen Signal und einem zweiten Referenzhintergrundrauschen zu bestimmen, wobei das zweite Referenzhintergrundrauschen ein Wert des zweiten optischen Signals ist, das von dem Empfänger (30) empfangen wurde, wenn sich kein Objekt dem Anzeigebildschirm (10) nähert, und ein kalibriertes erstes Referenzhintergrundrauschen entsprechend dem Kalibrierungskoeffizienten und einem ersten Referenzhintergrundrauschen zu bestimmen, wobei das erste Referenzhintergrundrauschen ein Wert des ersten optischen Signals ist, das von dem Empfänger (30) empfangen wurde, wenn sich kein Objekt dem Anzeigebildschirm (10) nähert;
wobei das erste Referenzhintergrundrauschen nach dem Erhalten des Kalibrierungskoeffizienten entsprechend dem von dem Empfänger empfangenen zweiten optischen Signal kalibriert wird.

2. Elektronisches Gerät nach Anspruch 1, wobei der Prozessor ferner dazu konfiguriert ist, ein Verhältnis aus dem von dem Empfänger (30) empfangenen zweiten optischen Signal zu dem zweiten Referenzhintergrundrauschen als den Kalibrierungskoeffizienten zu verwenden.

3. Elektronisches Gerät nach Anspruch 1, wobei der Prozessor ferner dazu konfiguriert ist, ein Produkt aus dem Kalibrierungskoeffizienten und dem ersten Referenzhintergrundrauschen als das kalibrierte erste Referenzhintergrundrauschen zu nutzen.

4. Elektronisches Gerät nach Anspruch 1, wobei der Prozessor ferner dazu konfiguriert ist, entsprechend dem vom Empfänger (30) empfangenen ersten optischen Signal und dem kalibrierten ersten Referenzhintergrundrauschen eine Variation des vom Empfänger (30) empfangenen ersten optischen Signals zu berechnen und entsprechend der Variation festzustellen, ob sich ein Objekt dem Anzeigebildschirm (10) nähert.

5. Verfahren zur Kalibrierung von Hintergrundrauschen, ausgeführt von einem elektronischen Gerät nach einem der Ansprüche 1 bis 4, umfassend:
Steuern (S1) eines Senders (20), um ein erstes optisches Signal und ein zweites optisches Signal von einer Nichtanzeigeseite eines Anzeigebildschirms (10) zu senden;
Steuern (S2) eines Empfängers (30), um das erste optische Signal und das zweite optische Signal von der Nichtanzeigeseite des Anzeigebildschirms (10) zu empfangen;
Bestimmen (S3) eines Kalibrierungskoeffizienten entsprechend dem empfangenen zweiten optischen Signal und einem zweiten Referenzhintergrundrauschen; und
Bestimmen (S4) eines kalibrierten ersten Referenzhintergrundrauschens entsprechend dem Kalibrierungskoeffizienten und eines ersten Referenzhintergrundrauschens,
wobei der Transmissionsgrad des Anzeigebildschirms (10) für das hindurchgehende erste optische Signal größer als jener des durch den Anzeigebildschirm (10) hindurchgehenden zweiten optischen Signals ist; und
das erste Referenzhintergrundrauschen ein Wert des von dem Empfänger (30) empfangenen ersten optischen Signals ist, wenn sich kein Objekt dem Anzeigebildschirm (10) nähert, und das zweite Referenzhintergrundrauschen ein Wert des von dem Empfänger (30) empfangenen zweiten optischen Signals ist, wenn sich kein Objekt dem Anzeigebildschirm (10) nähert.

6. Verfahren nach Anspruch 5, wobei das Bestimmen (S3) eines Kalibrierungskoeffizienten entsprechend dem empfangenen zweiten optischen Signal und einem zweiten Referenzhintergrundrauschen umfasst:
Verwenden eines Verhältnisses aus dem von dem Empfänger (30) empfangenen zweiten optischen Signal zu dem zweiten Referenzhintergrundrauschen als den Kalibrierungskoeffizienten.

7. Verfahren nach Anspruch 5, wobei das Bestimmen (S4) eines kalibrierten ersten Referenzhintergrundrauschens entsprechend dem Kalibrierungskoeffizienten und eines ersten Referenzhintergrundrauschens umfasst:
Verwenden eines Produkts des Kalibrierungskoeffizienten und des ersten Referenzhintergrundrauschens als das kalibrierte erste Referenzhintergrundrauschen.

8. Verfahren nach Anspruch 5, ferner umfassend:
Berechnen einer Variation des empfangenen ersten optischen Signals entsprechend dem empfangenen ersten optischen Signal und dem kalibrierten ersten Referenzhintergrundrauschen und Bestimmen, entsprechend der Variation, ob sich ein Objekt dem Anzeigebildschirm (10) nähert.

9. Computersoftwareprodukt, gespeichert in einem nicht flüchtigen Speichermedium, dazu konfiguriert, von dem Prozessor eines elektronischen Geräts nach einem der Ansprüche 1 bis 4 ausgeführt zu werden, um die Schritte nach einem der Ansprüche 5 bis 8 umzusetzen.

## Revendications

1. Dispositif électronique configuré pour déterminer si un objet s'approche d'un écran d'affichage, comprenant :
un écran d'affichage (10) disposé sur un cadre intermédiaire (40) ;
un émetteur (20), disposé sur un côté de non-affichage de l'écran d'affichage (10) et configuré pour émettre un premier signal optique et un second signal optique à l'écran d'affichage (10), la transmittance de l'écran d'affichage (10) pour le premier signal optique étant supérieure à celle pour le second signal optique ;
un récepteur (30), disposé sur le côté de non-affichage de l'écran d'affichage (10) et configuré pour recevoir le premier signal optique et le second signal optique qui sont réfléchis par un objet (70) disposé sur un côté d'affichage de l'écran d'affichage (10) ;
une carte mère à circuit imprimé (60), disposée sur le côté de non-affichage de l'écran d'affichage (10), l'émetteur (20) et le récepteur (30) étant respectivement disposés entre l'écran d'affichage (10) et la carte mère à circuit imprimé (60), l'émetteur (20) et le récepteur (30) étant disposés sur la carte mère à circuit imprimé (60), et une pièce en matériau bloquant la lumière (50) étant disposée sur les périphéries extérieures de l'émetteur (20) et du récepteur (30) ; et
un processeur, connecté au récepteur (30) et configuré pour déterminer un coefficient d'étalonnage selon le second signal optique reçu par le récepteur (30) et un second bruit de fond de référence, le second bruit de fond de référence étant une valeur du second signal optique reçu par le récepteur (30) lorsqu'aucun objet ne s'approche de l'écran d'affichage (10), et déterminer un premier bruit de fond de référence étalonné selon le coefficient d'étalonnage et un premier bruit de fond de référence, le premier bruit de fond de référence étant une valeur du premier signal optique reçu par le récepteur (30) lorsqu'aucun objet ne s'approche de l'écran d'affichage (10) ;
le premier bruit de fond de référence étant étalonné après l'obtention du coefficient d'étalonnage selon le second signal optique reçu par le récepteur.

2. Dispositif électronique selon la revendication 1, le processeur étant en outre configuré pour utiliser, en tant que coefficient d'étalonnage, un rapport entre le second signal optique reçu par le récepteur (30) et le second bruit de fond de référence.

3. Dispositif électronique selon la revendication 1, le processeur étant en outre configuré pour utiliser, en tant que premier bruit de fond de référence étalonné, un produit du coefficient d'étalonnage et du premier bruit de fond de référence.

4. Dispositif électronique selon la revendication 1, le processeur étant en outre configuré pour calculer, selon le premier signal optique reçu par le récepteur (30) et le premier bruit de fond de référence étalonné, une variation du premier signal optique reçu par le récepteur (30), et déterminer, selon la variation, si un objet s'approche de l'écran d'affichage (10).

5. Procédé d'étalonnage de bruit de fond, réalisé par un dispositif électronique selon l'une quelconque des revendications 1 à 4, le procédé consistant à :
commander (51) un émetteur (20) pour émettre un premier signal optique et un second signal optique depuis un côté de non-affichage d'un écran d'affichage (10) ;
commander (S2) un récepteur (30) pour recevoir le premier signal optique et le second signal optique depuis le côté de non-affichage de l'écran d'affichage (10) ;
déterminer (S3) un coefficient d'étalonnage selon le second signal optique reçu et un second bruit de fond de référence ; et
déterminer (S4) un premier bruit de fond de référence étalonné selon le coefficient d'étalonnage et un premier bruit de fond de référence,
la transmittance de l'écran d'affichage (10) pour le premier signal optique qui le traverse étant supérieure à celle du second signal optique qui traverse l'écran d'affichage (10) ; et
le premier bruit de fond de référence étant une valeur du premier signal optique reçu par le récepteur (30) lorsqu'aucun objet ne s'approche de l'écran d'affichage (10), et le second bruit de fond de référence étant une valeur du second signal optique reçu par le récepteur (30) lorsqu'aucun objet ne s'approche de l'écran d'affichage (10).

6. Procédé selon la revendication 5, la détermination (S3) d'un coefficient d'étalonnage selon le second signal optique reçu et un second bruit de fond de référence consistant à :
utiliser, en tant que coefficient d'étalonnage, un rapport entre le second signal optique reçu par le récepteur (30) et le second bruit de fond de référence.

7. Procédé selon la revendication 5, la détermination (S4) d'un premier bruit de fond de référence étalonné selon le coefficient d'étalonnage et un premier bruit de fond de référence consistant à :
utiliser, en tant que premier bruit de fond de référence étalonné, un produit du coefficient d'étalonnage et du premier bruit de fond de référence.

8. Procédé selon la revendication 5, consistant en outre à :
calculer une variation du premier signal optique reçu selon le premier signal optique reçu et le premier bruit de fond de référence étalonné, et déterminer, selon la variation, si un objet s'approche de l'écran d'affichage (10).

9. Produit-logiciel informatique stocké dans un support de stockage non volatil configuré pour être exécuté par le processeur d'un dispositif électronique selon l'une quelconque des revendications 1 à 4 afin de mettre en œuvre les étapes du procédé selon l'une quelconque des revendications 5 à 8.
